# EUROPEAN PATENT APPLICATION

(11) **EP 4 660 579 A1**
(43) Date of publication of application: **10.12.2025**
(21) Application number: 24750276.8
(22) Date of filing: 30.01.2024
(51) Int. Cl.: G01C 15/06, G01B 11/30, G01C 7/02, G01C 15/00

(54) **SURFACE MEASUREMENT INSTRUMENT, SURFACE MEASUREMENT SYSTEM, AND MEASUREMENT METHOD**

(30) Priority: 02.02.2023 JP 2023014416
(71) Applicant: Topcon Corporation, Tokyo 174-8580 (JP)
(72) Inventor: KIRYU, Noriyasu, Tokyo 174-8580 (JP); NISHITA, Nobuyuki, Tokyo 174-8580 (JP)
(74) Representative: dompatent
(86) International application number: PCT/JP2024/002809
(87) International publication number: WO 2024/162327

(57) **Abstract**

The present disclosure relates to a surface measuring instrument (40), a surface measuring system (1), and a measurement method capable of accurately measuring measurement surfaces of various aspects. Provided is a surface measurement jig including a cylindrical body (44) that lands on a measurement surface (WL) and has an outer circumferential side surface movable along the measurement surface (WL), a base body (43) to which the cylindrical body is attached, and a target (42) from which position information of the target (42) is able to be acquired through remote measurement, in which the target (42) is disposed on a rotation axis of the cylindrical body such that a center position of the position information is on a central axis (44a) of the cylindrical body. Even when the cylindrical body moves in contact with the measurement surface, a distance (T) from the measurement surface to the center position of the target is always kept constant, so that an uneven state and dimensions, etc., of the measurement surface can be accurately and easily measured.

## Description

### Technical Field

The present disclosure relates to a surface measuring instrument and a measuring system capable of accurately measuring measurement surfaces of various aspects such as roads, exterior walls, ceiling surfaces, and other wall surfaces.

### Background Art

Various measuring instruments have been proposed to measure an uneven state of a road surface. Patent Literature 1 discloses a measuring instrument. The measuring instrument includes a laser light receiving device, which is loaded on a cart. The measuring instrument causes the cart to travel on a road, allowing an uneven state of a road surface to be acquired. Patent Literature 2 discloses a measuring jig. The measuring jig includes a prism and an operation rod, which are attached to a base body provided with wheels. An operator acquires an uneven state of a road surface by moving the base body along a road with the operation rod while causing a surveying instrument to measure the prism.

### Citation List

### Patent Literature

Patent Literature 1: Japanese Patent No. 3829225
Patent Literature 2: Japanese Patent No. 5669315

### Summary

### Technical Problem

Patent Literature 1 discloses the cart provided with four wheels. Accordingly, when unevenness is disposed between front and rear wheels on a road surface having fine unevenness, a failure in accurate measurement of an uneven state may occur, such as being unable to measure the uneven state. Patent Literature 2 discloses a configuration in which only two wheels are provided on the base body. The prism is disposed immediately above the axle having a certain height from the grounding point of the wheel. This configuration causes inclination of the prism when the operation rod of the operator is inclined. Accordingly, a distance between the grounding point and the prism is changed, which may cause a failure in accurate measurement of the uneven state. Furthermore, in both Patent Literature 1 and Patent Literature 2, a measurement surface is assumed to be only a road surface, and a wall surface or a ceiling surface is not assumed.

The present disclosure has been made in view of such a problem, and provides a surface measuring instrument, a surface measuring system, and a measurement method capable of accurately measuring measurement surfaces of various aspects such as a road, an exterior wall, and a ceiling surface without being limited to a road surface.

### Solution to Problem

In order to solve the above problem, a surface measuring instrument according to a first aspect of the present disclosure has a configuration of including a cylindrical body that lands on a measurement surface and has an outer circumferential side surface movable along the measurement surface, a base body to which the cylindrical body is attached, and a target from which position information of the target is able to be acquired through remote measurement, in which the target is disposed such that a center position of the position information is on a central axis of the cylindrical body.

According to this aspect, movement of the cylindrical body on the measurement surface enables measurement. Even if the measurement surface is a wall surface or a ceiling surface, or a curved surface or an inclined surface, the measuring instrument is capable of measuring the measurement surface. The distance from the measurement surface is always constant on the central axis of the cylindrical body. This allows measurement of the surface without worrying about the inclination of the base body.

A surface measuring instrument according to a second aspect is configured such that, in the first aspect, the cylindrical body is a wheel, has a mechanism rotatable at a center, and is rotatably attached to the base body with a rotation axis being horizontal, the target is a retroreflector that retroreflects incident light in a direction opposite to an incident direction, the center position of the position information is an optical center of the target, and the target is disposed on an end surface of the wheel such that the optical center is on the rotation axis of the wheel. According to this aspect, measuring a distance and an angle of the target of the base body running on the measurement surface with the wheel enables measurement surfaces of various aspects to be easily measured by measuring the measurement surfaces.

According to a surface measuring instrument of a third aspect, in the first or second aspect, the cylindrical body is configured to be self-standing on the outer circumferential side surface.

According to this aspect, the movement of the base body is stabilized.

According to a surface measuring instrument of a fourth aspect, in the first to third aspects, the cylindrical body is configured as a divided body. The divided body may include a pair of cylinders. According to this aspect, the movement of the base body is stabilized.

A first surface measuring system has a configuration of including a surface measuring instrument including a cylindrical body that lands on a measurement surface and has an outer circumferential side surface movable along the measurement surface, a base body to which the cylindrical body is attached, and a target from which position information of the target is able to be acquired through remote measurement, the target being disposed such that a center position of the position information is on a central axis of the cylindrical body;
and a surveying instrument capable of measuring a distance and an angle of the target, in which the surveying instrument is capable of measuring a distance and an angle of the target of the surface measuring instrument that is being moved along the measurement surface, acquires the position information of the target, and calculates shape data of the measurement surface.

There is provided a first measurement method, by using a surface measuring instrument including a cylindrical body that lands on a measurement surface and has an outer circumferential side surface movable along the measurement surface, a base body to which the cylindrical body is attached, and a target from which position information of the target is able to be acquired through remote measurement, the target being disposed such that a center position of the position information is on a central axis of the cylindrical body, including acquiring the position information of the target while moving the surface measuring instrument along the measurement surface; and acquiring the position information of the measurement surface by offsetting the position information of the target in a direction of the measurement surface by a radius of the cylindrical body, and calculating shape data of the measurement surface.

### Advantageous Effects

As is clear from the above description, it is possible to provide a surface measuring instrument, a surface measuring system, and a measurement method capable of accurately measuring measurement surfaces of various aspects. Brief Description of Drawings

FIG. 1 illustrates a schematic configuration of a surface measuring instrument and a surface measuring system according to a preferred embodiment of the present disclosure.
FIG. 2 is a block diagram of a surveying instrument.
FIGS. 3A and 3B illustrate the surface measuring instrument.

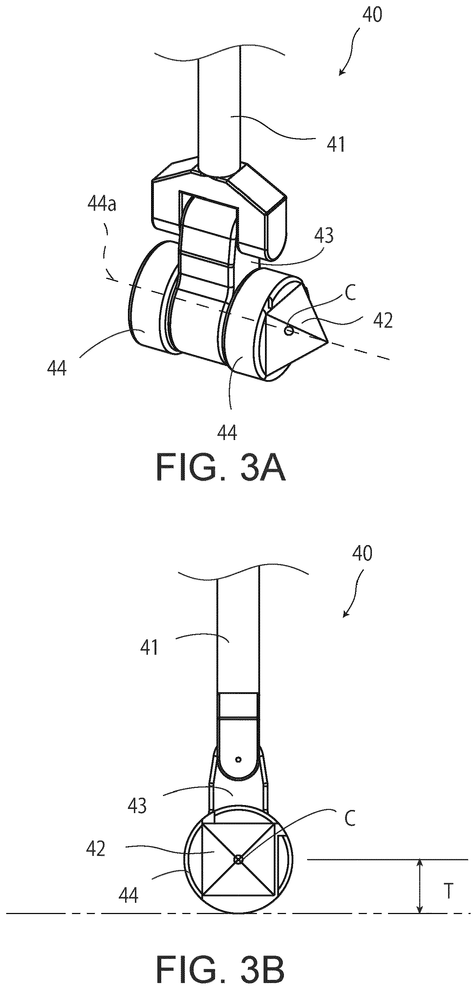

FIG. 3A is a perspective view of the surface measuring instrument. FIG. 3B is a side view of the surface measuring instrument.

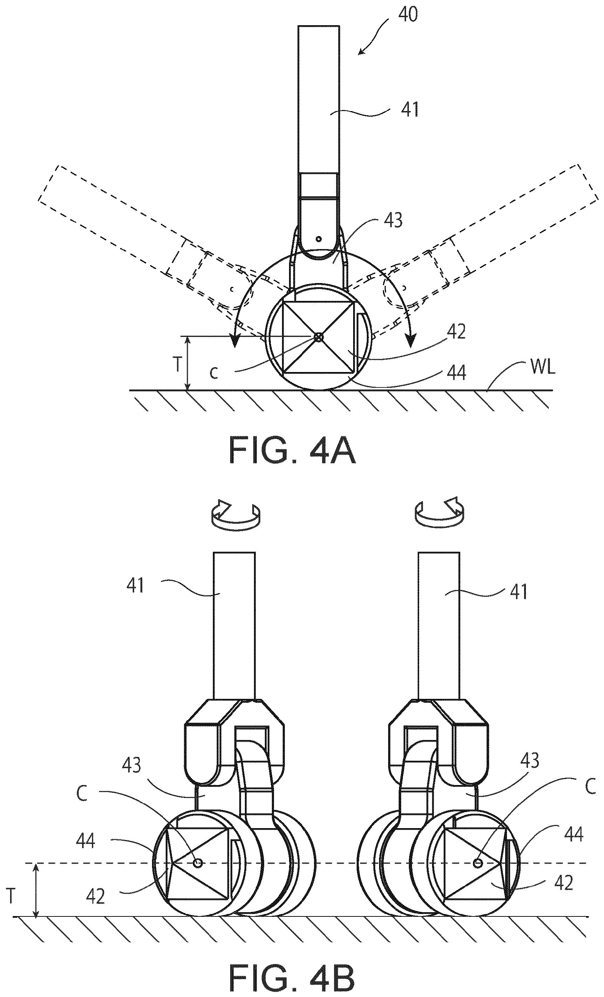

FIGS. 4A and 4B illustrate a use state of the surface measuring instrument.

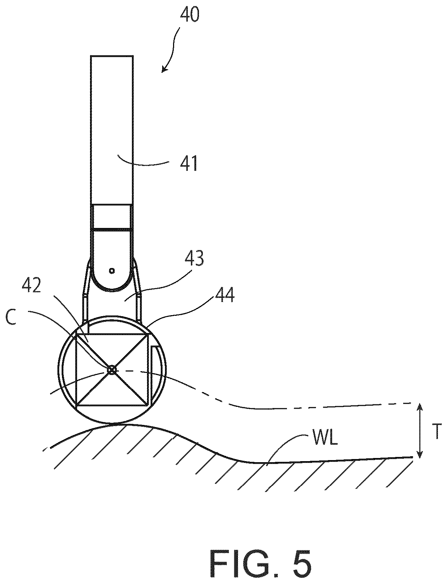

FIG. 5 illustrates a use state of the surface measuring instrument.

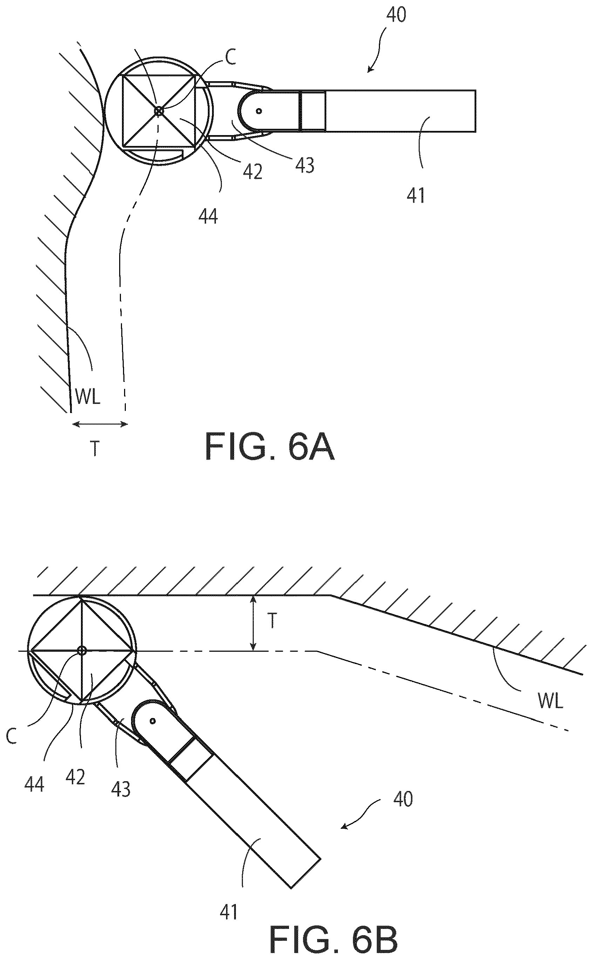

FIGS. 6A and 6B illustrate a use state of the surface measuring instrument.

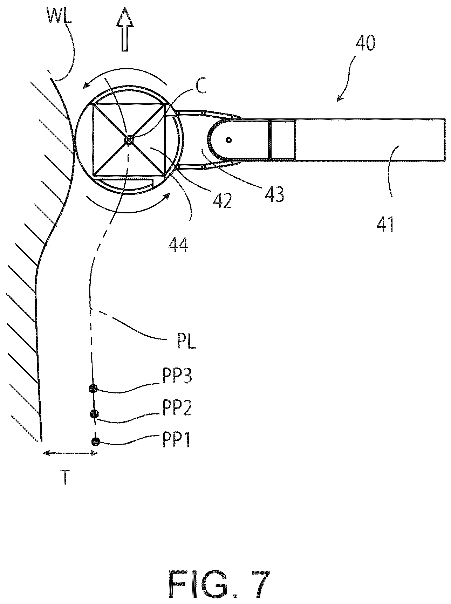

FIG. 7 illustrates an example of the surface measuring instrument.

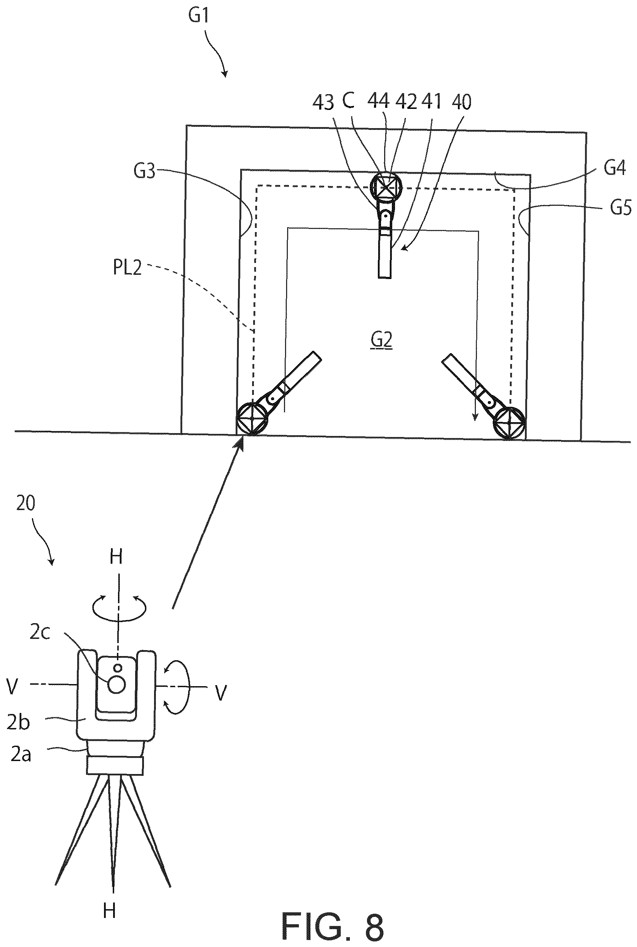

FIG. 8 illustrates another example of the surface measuring instrument.

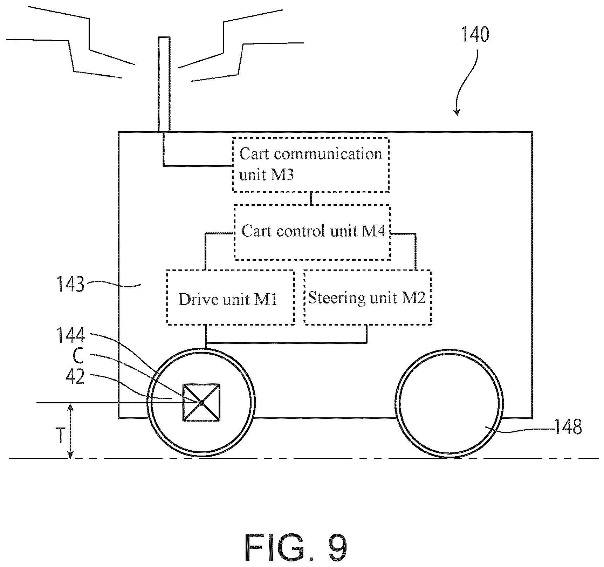

FIG. 9 illustrates a modification example of the surface measuring instrument and the surface measuring system.

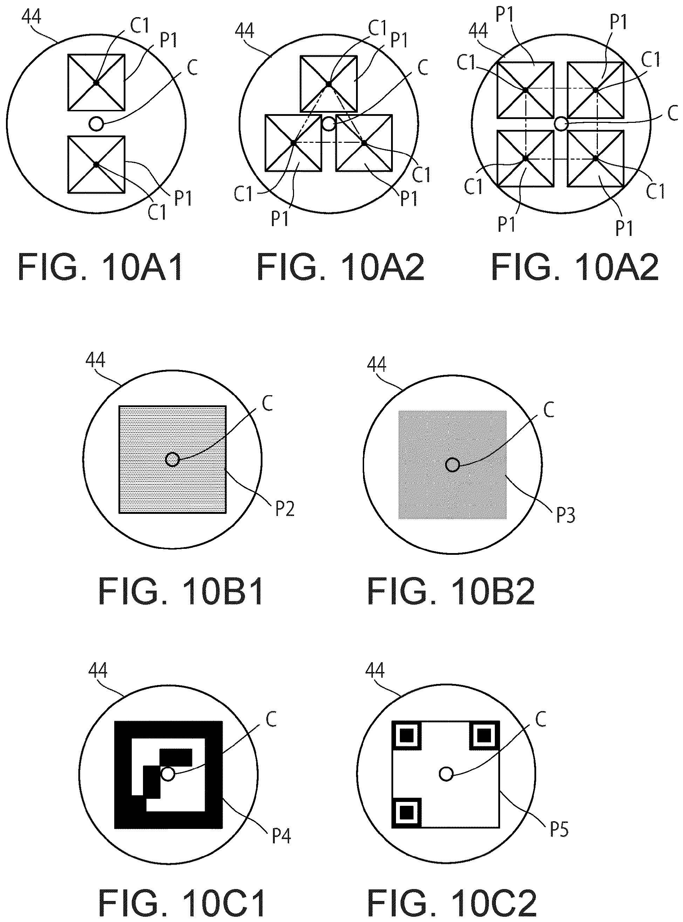

FIGS. 10A1 to 10A3, FIGS. 10B1 and 10B2, and FIGS. 10C1 and 10C2 illustrate modification examples of the surface measuring instrument.

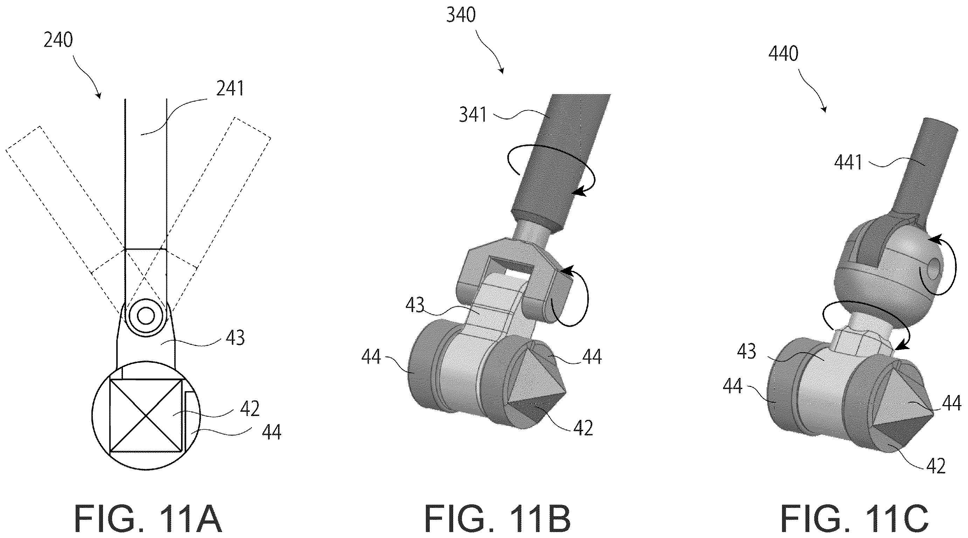

FIGS. 11A to 11C illustrate modification examples of the surface measuring instrument.

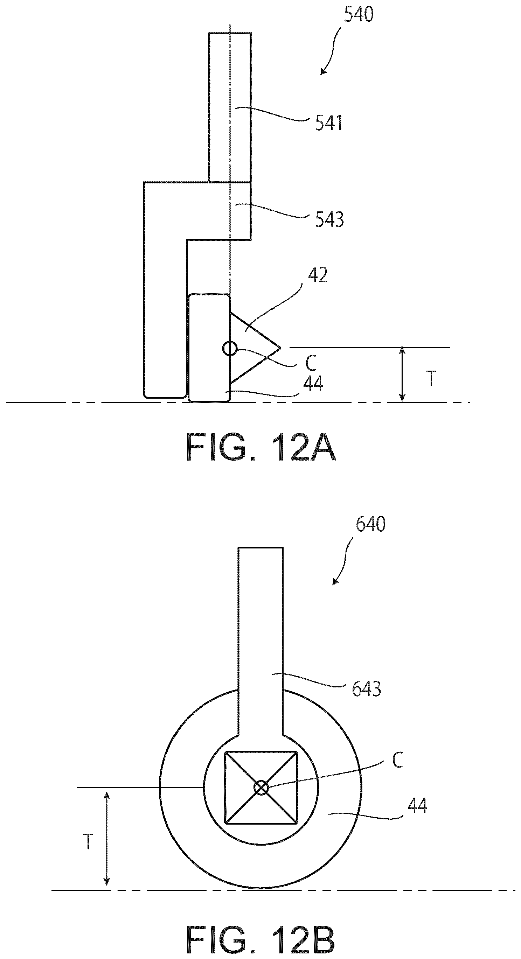

FIGS. 12A and 12B illustrate modification examples of the surface measuring instrument.

### Description of Embodiments

Hereinafter, a detailed embodiment of the present disclosure will be described with reference to the drawings. The embodiment is not intended to limit the present disclosure but is an example, and all features described in the embodiment and combinations thereof are not necessarily essential to the present disclosure. In the following description of the embodiment and modification examples, the same constituents are provided with the same reference signs, and redundant description will be omitted as appropriate.

### (Surface Measuring System)

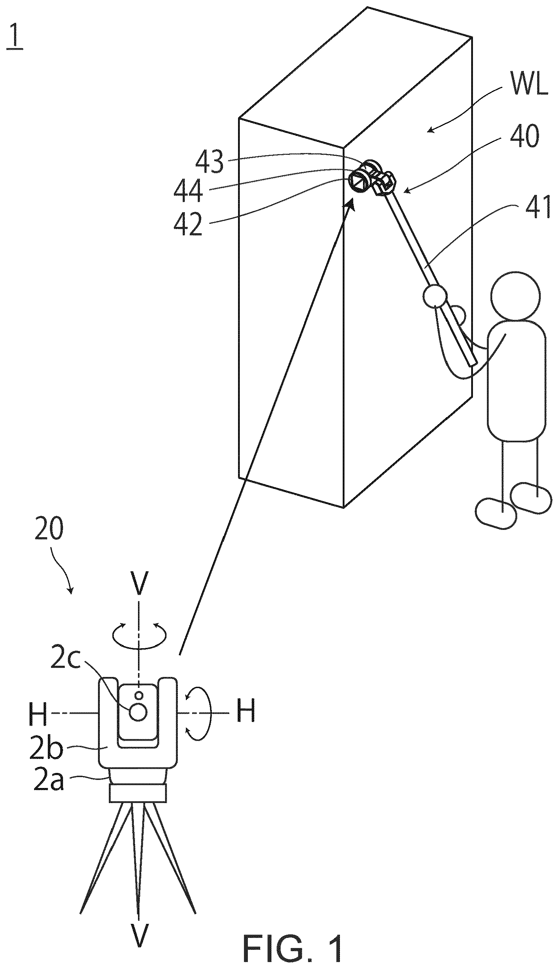

FIG. 1 illustrates a schematic configuration of a surface measuring system 1 including a surface measuring instrument 40 according to a preferred embodiment of the present disclosure, and illustrates imaged work at an inspection site. The surface measuring system 1 according to the present embodiment is a system capable of measuring conditions related to a measurement surface WL, such as an uneven state, a shape, and dimensions of the measurement surface WL. The surface measuring system 1 is configured to include a surveying instrument 20 and a surface measuring instrument 40.

The surveying instrument 20 is a total station having a distance/angle-measuring function and a tracking function. The surveying instrument 20 is installed on a reference point center by using a tripod. The surveying instrument 20 includes a base portion 2a provided on a leveling device, a bracket portion 2b that horizontally rotates the base portion 2a about a vertical axis V, and a telescope 2c that vertically rotates about a horizontal axis H at the center of the bracket portion 2b.

The surface measuring instrument 40 includes a base body 43 attached to the tip of an operation rod 41 and a target 42 which is a target for the distance/angle-measuring function and the tracking function. The base body 43 includes a pair of wheels 44 and is configured to be movable along the measurement surface WL. The target 42 is mounted on the base body 43 such that a distance between the center position of the target 42 and the measurement surface WL is constant regardless of movement of the base body 43.

When measuring the measurement surface WL, an operator grips the operation rod 41, brings the wheels 44 into contact with the measurement surface WL, and moves the base body 43 along the measurement surface WL. During measurement, the surveying instrument 20 automatically tracks the target 42 according to the tracking function, and measures a distance and an angle of the target 42 according to the distance/angle-measuring function. The surveying instrument 20 acquires position information of the target 42 from the distance to the target 42 and the azimuth angle acquired through the measurement, and calculates the unevenness and the dimensions of the measurement surface WL.

### (Surveying Instrument)

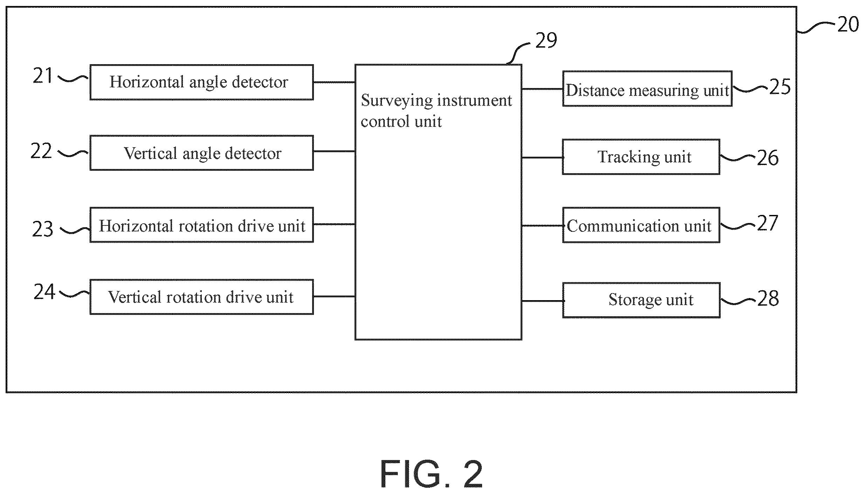

FIG. 2 is a configuration block diagram of the surveying instrument 20. The surveying instrument 20 is a motor drive total station, and includes a horizontal angle detector 21, a vertical angle detector 22, a horizontal rotation drive unit 23, a vertical rotation drive unit 24, a distance measuring unit 25, a tracking unit 26, a communication unit 27, a storage unit 28, and a surveying instrument control unit 29 to which all of the above constituents are connected.

The horizontal angle detector 21 and the vertical angle detector 22 are each implemented using absolute encoders or incremental encoders including a rotary disc, a slit, a light emitting diode, and an image sensor. The horizontal angle detector 21, which is provided on the rotation axis of the bracket portion 2b, detects a horizontal angle of the bracket portion 2b. The vertical angle detector 22, which is provided on the horizontal axis H of the telescope 2c, detects a vertical angle of the telescope 2c.

The horizontal rotation drive unit 23 and the vertical rotation drive unit 24 are motors. Under the control of the surveying instrument control unit 29, the horizontal rotation drive unit 23 moves a rotation axis of the bracket portion 2b, and the vertical rotation drive unit 24 moves a rotation axis of the telescope 2c. The horizontal rotation drive unit 23 and the vertical rotation drive unit 24 change an orientation of the telescope 2c in cooperation. The survey instrument implements an angle-measuring function with the horizontal angle detector 21 and the vertical angle detector 22. The horizontal rotation drive unit 23 and the vertical rotation drive unit 24 configure a driving mechanism.

The distance measuring unit 25 includes a light transmitting unit and a light receiving unit. The distance measuring unit 25 collimates the target 42, emits distance-measuring light such as infrared pulsed laser light to the target 42, receives reflected light thereof with the light receiving unit, and measures a distance from phases of the distance-measuring light and internal reference light.

The tracking unit 26 includes a tracking light transmitting system that emits infrared laser light having a wavelength different from that of the distance-measuring light as tracking light, and a tracking light receiving system including an image sensor such as a charge-coupled device (CCD) or a complementary metal-oxide-semiconductor (CMOS). The surveying instrument control unit 29 obtains the center of the target image from the information acquired by the tracking unit 26. The surveying instrument control unit 29 then detects the center as a target position, and automatically tracks the target so that the telescope 2c always faces the target, which allows a distance between the center of the target image and the collimation axis center of the telescope 2c to fall within a certain value.

The communication unit 27 enables communication with an external network, and is connected to the Internet by using the Internet protocol (TCP/IP), etc., to transmit and receive information. The information transmitted and received by the communication unit 27 is, for example, a measurement result (measured distance/angle) measured by the surveying instrument 20 transmitted to an information processing device (not illustrated), or a command signal received from a controller (not illustrated).

The surveying instrument control unit 29 is, for example, a microcontroller, in which at least one processor (for example, a central processing unit (CPU)) and at least one memory (for example, a dynamic random access memory (DRAM), or a static random access memory (SRAM)) are mounted on a base. The processor executes each type of control according to a stored program. As the control, the surveying instrument control unit 29 performs, for example, transmission and reception of information via the communication unit 27, driving of each rotation axis using the horizontal rotation drive unit 23 and the vertical rotation drive unit 24, distance measurement using the distance measuring unit 25, angle measurement using the horizontal angle detector 21 and the vertical angle detector 22, auto-tracking using the tracking unit 26, and calculation processing on acquired measurement data. The storage unit 28 is a storage medium such as a hard disk drive, and stores acquired measurement data and arithmetic results.

### (Surface Measuring Instrument)

Next, the surface measuring instrument 40 will be described. FIGS. 3A and 3B illustrate the surface measuring instrument 40. FIG. 3A is a perspective view of the surface measuring instrument 40. FIG. 3B is a side view of the surface measuring instrument 40.

The surface measuring instrument 40 includes the operation rod 41, the target 42, and the base body 43.

On both side surfaces of the base body 43, a pair of wheels 44 is provided with a rotation axis (axle) being horizontal and the rotation axes being aligned. The wheel 44 has a rotatable mechanism (axle hole or axle) at the center. The base body 43 is configured to be movable on the measurement surface WL by the pair of wheels 44. The base body 43 is attached to the tip of the operation rod 41 that operates movement of the base body 43.

The wheel 44 is a cylindrical body, and has an outer circumferential side surface that lands on the measurement surface WL and is movable along the measurement surface WL. The rotation axis of the wheel 44, which is a cylindrical body, is a central axis 44a of the wheel 44 (see FIG. 3A). The wheel 44 alone is configured to be self-standing on the outer circumferential side surface. Therefore, the surface measuring instrument 40 placed on a horizontal surface does not fall by itself. When the pair of wheels 44 is disposed with the axles aligned, the pair of wheels may be configured as a divided body of a cylindrical body. The cylindrical body may be self-standing on the outer circumferential side surfaces of the pair of wheels 44. The material of wheels 44 is not particularly specified. Preferably, wheels 44 are formed of a material such as a hard synthetic resin member, a metal member, or wood, which is hardly deformed by a load of a degree of contact with the measurement surface WL. Such a configuration can suppress a measurement error due to elastic deformation in contact with the measurement surface WL. Materials such as rubber, which tend to deform easily by a load, are therefore not preferred.

The pair of wheels 44 is rotatably supported by both side surfaces of the base body 43. It is not essential that the wheel 44 is rotatably supported. The wheel 44 may be fixed to the base body 43 as long as the wheel 44, which is a cylindrical body, can be smoothly moved along the measurement surface WL.

The target 42 includes a reflector such as a corner cube prism, and is a so-called omnidirectional prism or a retroreflector that retroreflects light incident from the entire circumference (360 degrees) in a direction opposite to the incident direction. The target 42 is attached to the exposed end surface of one wheel 44 such that an optical center C of the target 42 is on the rotation axis of the wheel 44. In the present embodiment, one target 42 is attached only to one wheel 44. Alternatively, two targets 42 may be respectively attached to the outer end surfaces of the wheels 44. In addition, the target 42 of the present embodiment is integrated by assembling four prisms in a pyramid shape. The present disclosure is not limited thereto, and the number of prisms may be increased, and the target 42 may be formed by integrating a plurality of prisms so that measurement can be performed from various directions.

With the above configuration, when the wheel 44 is rotated, the target 42 is also rotated together with the wheel 44, but the distance between the grounding point of the wheel 44 and the optical center C is always kept constant. Assuming that a height from a horizontal surface to the optical center C when the wheel 44 lands on the horizontal surface is a distance T, when the wheel 44 lands on the measurement surface WL, the distance between the grounding point of the wheel 44 and the optical center C is always the distance T. In the present embodiment, the distance T is the radius of the wheel 44.

FIGS. 4A and 4B, FIG. 5, and FIGS. 6A and 6B illustrate use states of the surface measuring instrument 40. Since the pair of wheels 44 is rotatably provided on the base body 43, the wheels 44 and the base body 43 are rotatable relative to each other with respect to the rotation axes (axles) of the wheels 44. The wheel 44 is rotatable about the rotation axis with respect to the base body 43, and the base body 43 and the operation rod 41 connected to the base body 43 are rotatable about the rotation axis of the wheel 44 while the wheel 44 is in contact with the measurement surface WL.

The surface measuring instrument 40 includes the target 42 disposed on the rotation axes of the pair of wheels 44. Thus, as long as the wheels 44 are in contact with the measurement surface WL, the distance between the grounding point of the wheels 44 and the optical center C of the target 42 is always constant (distance T) regardless of a posture of the base body 43 even if the wheels 44 are rotated to move the base body 43 or the base body 43 is rotated about the rotation axes of the wheels 44.

As illustrated in FIG. 4A, even when the base body 43 and the operation rod 41 are rotated about the rotation axes of the wheels 44 while the wheels 44 remain in contact with the measurement surface WL and are inclined from the vertical position, the distance between the grounding point of the wheel 44 and the target 42 is always maintained to be the distance T without change. In addition, as illustrated in FIG. 4B, even if the surface measuring instrument 40 is rotated with respect to the vertical axis of the measurement surface WL while the pair of wheels 44 is in contact with the measurement surface WL, a distance between the grounding point of the wheel 44 and the target 42 is always maintained to be the distance T without change. That is, even if the surface measuring instrument 40 faces the left and right with respect to an advancing direction of the surface measuring instrument 40, the distance between the grounding point of the wheel 44 and the target 42 is always maintained to be the distance T.

When the outer circumferential side surfaces of the pair of wheels 44 are in contact with the measurement surface WL, the distance between the target 42 and the measurement surface WL is constant (distance T) regardless of whether the surface measuring instrument 40 is moved in the vertical direction or in the horizontal direction.

In addition, as illustrated in FIG. 5, since the surface measuring instrument 40 is provided with only a pair of wheels 44 on the base body 43, even if the measurement surface WL is a curved surface with unevenness, the base body 43 can be moved along the measurement surface WL by rotating the wheels 44. Since the wheel 44 is a cylindrical body, the outer circumferential side surface of the wheel 44 can always land on the measurement surface WL. The rotation axis of the wheel 44, that is, the optical center C of the target 42 passes through a position offset by the distance T in the normal direction of the measurement surface WL at the grounding point of the wheel 44.

The operator only needs to move the base body 43 by operating the operation rod 41 so that the wheel 44 is always in contact with the measurement surface WL, and does not need to worry about a posture of the base body 43. A shape of the measurement surface WL is not limited to a floor surface and a road surface, and the shape can be measured by using the surface measuring instrument 40 even if the measurement surface WL is a vertical surface such as a wall surface, an inclined surface, a ceiling surface, a curved surface, or a bent surface. For example, as illustrated in FIGS. 6A and 6B, even if the measurement surface WL is a wall surface with unevenness, or the measurement surface WL is a ceiling surface with a bent surface, the measurement surface WL can be measured without any problem. The operator only needs to move the base body 43 along the measurement surface WL with the wheel 44.

The surface measuring system 1 measures a distance and an angle of the target 42 with the surveying instrument 20, acquires a distance and an azimuth angle to the optical center C of the target 42, and calculates three-dimensional coordinates as position information of the optical center C on the basis of the measured measurement data.

The distance between the grounding point of the wheel 44 and the optical center C of the target 42 is always constant. Thus, by using this fact, the surveying instrument 20 automatically tracks the target 42 and constantly measures a distance and an angle while moving the base body 43 to move the wheel 44 along the measurement surface WL. The position information of the wheel 44, which is being moved on the measurement surface WL, in other words, the position information of the optical center C is continuously acquired. Offsetting the acquired position information by the distance T toward the measurement surface WL allows position information of the measurement surface WL to be acquired.

### (Example 1)

An example of the measurement with the surface measuring system 1 will be described. The measurement surface WL is a wall surface. The surface measuring instrument 40 measures the measurement surface WL to acquire shape data such as an uneven state, a shape and an inclination.

As illustrated in FIG. 1, first, the surveying instrument 20 is installed at a reference point. The reference point is preferably a known point, but may be any point as long as the point eliminates the need for detection of a location satisfying a certain condition on the measurement surface WL and specifying of a position thereof.

The operator grips the operation rod 41 to ground the wheel 44 to the measurement surface WL, and rotates the wheel 44 to move the base body 43 along the measurement surface WL. During measurement, the surveying instrument 20 constantly tracks the target 42 and measures a distance and an angle of the target 42.

As illustrated in FIG. 7, coordinates PQ1 (x1, y1, z1), PQ2 (x2, y2, z2), PQ3 (x3, y3, z3) ... of respective points are calculated as position information of measurement points PP1, PP2, PP3 ... from the continuously acquired measurement data. Each coordinate is calculated as an absolute coordinate when the surveying instrument 20 is installed at a known point, and is calculated as a relative coordinate when the surveying instrument 20 is installed at any point. The storage unit 28 stores the acquired data and arithmetic results.

The surveying instrument control unit 29 plots the calculated coordinates of each measurement point in a coordinate space, connects the points plotted in the order of acquisition, and obtains a virtual curve PL and a virtual plane to which the plot points fit. The surveying instrument control unit 29 offsets the plot point of the measurement point PP by the distance T in the direction toward the measurement surface WL to calculate the point on the measurement surface WL. Based on this, the surveying instrument control unit 29 calculates the shape data of the measurement surface WL.

When acquiring detailed surface shape data of the measurement surface WL, the operator first brings the wheel 44 into contact with the floor surface and the measurement surface WL with the lower end of the measurement surface WL as an initial position. Next, the operator operates the operation rod 41 to rotate the wheel 44 while the wheel 44 is in contact with the measurement surface WL, and moves the base body 43 upward to the upper end of the measurement surface WL. When the operator has completed the movement of the base body 43 to the upper end of the measurement surface WL, the operator then moves the base body 43 laterally (leftward or rightward) by a predetermined distance while the wheel 44 is kept in contact with the measurement surface WL, and then moves the base body 43 downward from the upper end to the lower end of the measurement surface WL. When the wheel 44 comes into contact with the floor surface and the base body 43 reaches the lower end of the measurement surface WL, the operator moves the wheel 44 in the same direction as before by a predetermined distance while the wheel 44 is kept in contact with the measurement surface WL, and repeatedly performs the above operation.

The surveying instrument 20 measures a distance and an angle of the target 42 at predetermined intervals, for example, time intervals of 0.1 to 1 second, or distance intervals of 0.1 cm to 5 cm, while automatically tracking the target 42.

The surveying instrument control unit 29 calculates the three-dimensional coordinates of all the acquired measurement points PP and plots them in the coordinate space. The surveying instrument control unit 29 offsets each point of the acquired point cloud with respect to the measurement surface WL. The offset direction of a certain measurement point PP is a normal direction of an approximate straight line obtained from a point parallel to the virtual plane obtained from the point cloud (on the orthogonal plane) and in a predetermined range before and after the point cloud. Two opposite directions are calculated in this manner, and either direction is selected manually or automatically. As a method of obtaining a surface or a straight line from a point cloud, a known method may be used, and the description thereof will be omitted. The surveying instrument control unit 29 offsets each point of the acquired point cloud by the distance T in the calculated and selected offset direction to acquire the coordinates on the measurement surface WL.

### (Example 2)

FIG. 8 illustrates another example using the surface measuring system 1 and the surface measuring instrument 40.

The surface measuring instrument 40 can also measure a wall surface, a ceiling surface, and a bent surface, and thus can also measure a ceiling surface and a floor surface continuously from the wall surface. The surface measuring instrument 40 continuously measures an inner peripheral surface of an opening to measure a shape of the opening. For example, measuring an opening shape of a wall surface for fitting a window frame or an inner frame shape of a building entrance enables whether or not a window or a door can be fitted to be checked.

An opening G2 of a garage G1 illustrated in FIG. 8 is an entrance of the garage G1, and is an opening of a wall surface of the garage G1 provided for fitting a ready-made shutter (not illustrated). The operator moves the surface measuring instrument 40 along the inner peripheral surface of the opening G2, that is, a left side surface G3, a ceiling surface G4, and a right side surface G5 forming the opening G2, to measure dimensions and an inclination of the opening G2.

First, the operator disposes the surveying instrument 20 at a reference point. To dispose the surface measuring instrument 40 at the lower end portion of the left side surface G3 as an initial position, the operator brings the wheel 44 into contact with the floor surface and the left side surface G3.

Next, the surveying instrument 20 locks the target 42 to automatically track the target. While the surveying instrument 20 is automatically tracking the target 42, the operator performs the following operation with the operation rod 41.

The operator rotates the wheel 44 while being in contact with the left side surface G3 to move the base body 43 upward along the left side surface G3. The operator moves the base body 43 to the upper end of the left side surface G3. When the wheel 44 comes into contact with the ceiling surface G4, the operator then rotates the wheel 44 along the ceiling surface G4 to move the wheel 44 toward the right side surface G5. When the wheel 44 comes into contact with the right side surface G5 and the base body 43 reaches at the right side surface G5, the operator then moves the wheel 44 downward along the right side surface G5, until the wheel 44 comes into contact with the floor surface.

It is preferable that the end surface of the wheel 44 is disposed along the end portion of the opening G2 and the wheel 44 is rotated by using the end portion of the opening G2 as a mark because the movement of the base body 43 is stabilized.

Even when the base body 43 is rotated relative to the wheel 44, the distance between the target 42 and the grounding point of the wheel 44 does not change, so that the operator can move the base body 43 without worrying about a posture of the base body 43 or an inclination of the operation rod 41.

Since the opening G2 is an entrance, measuring three surfaces such as the left side surface G3, the ceiling surface G4, and the right side surface G5 enables the shape of the opening G2 to be calculated without measuring the other floor surface by moving the base body 43. When an opening such as an inner frame of a window does not have a floor surface as a configuration surface, the base body 43 is moved along the inner peripheral surface until the wheel 44 returns to the initial position, and the entire circumference of the opening is measured.

As described above, while causing the surveying instrument 20 to track the target 42, the operator operates the operation rod 41 to move the base body 43 along the inner peripheral surface of the opening G2 such that the wheel 44 is rotated, and causes the surveying instrument 20 to constantly perform distance measurement and angle measurement.

When the base body 43 is moved along the inner peripheral surface of the opening G2, the optical center C passes through a virtual line PL2 offset inward from the opening G2 by the distance T. The surveying instrument control unit 29 calculates three-dimensional coordinates of all the acquired measurement points, plots the three-dimensional coordinates in a coordinate space, and connects the points in order. Further, connecting the end point and the start point of the plot point forms a rectangular closed curve in a three-dimensional space. Offsetting the rectangular closed curve and the plot points to the outside of the closed curve by the distance T on the plane formed from all the plot points allows outer shape data of the opening G2, that is, coordinates of the opening G2, dimensions, an inclination, and an uneven state of each side of the opening G2, and a distortion of the opening G2, etc., to be calculated.

The surface measuring system 1 may include an "inner frame measurement mode" as a mode for measuring an inner frame. When the "inner frame measurement mode" is designated, if the measurement surface is a rectangular inner peripheral surface, the surveying instrument control unit 29 performs a special arithmetic process. First, the operator starts to measure the left side surface G3 as a first measurement surface, and moves the base body 43 from the lower end to the upper end of the left side surface G3 to measure the left side surface G3. Next, the operator measures the ceiling surface G4, and finally, measures the right side surface G5. The surveying instrument control unit 29 offsets all the point clouds belonging to the left side surface G3 in the left direction by the distance T with the surface fitted by the acquired point cloud as a reference surface. The surveying instrument control unit 29 offsets the point clouds belonging to the ceiling surface G4 vertically upward. The surveying instrument control unit 29 offsets the point clouds belonging to the right side G5 in the right direction. The offset of all point clouds is performed on the reference surface. A measurement mode such as "road surface unevenness measurement mode" is prepared for each type of measurement surface including a ceiling surface and a wall surface. According to the measurement mode, a surface to be measured can be set in advance, and an offset direction of a measurement point is designated.

In addition, in the present embodiment, a ready-made shutter is internally fitted into the opening G2. On the other hand, when a self-made door having unknown precise dimensions is internally fitted into the opening, the operators move the base body 43 along an outer peripheral surface of the door while causing the surveying instrument 20 to track the target 42 and constantly measure a distance and an angle to easily acquire shape data such as an outer shape, dimensions, and an inclination of the door.

### (Modification Example 1: Surface Measuring Instrument)

FIG. 9 illustrates a surface measuring instrument 140 according to a modification example.

The surface measuring instrument 140 is a travelable cart. The surface measuring instrument 140 of the present embodiment is capable of auto-traveling, and is configured to be capable of traveling on the measurement surface WL through traveling based on a remote operation or autonomous traveling. Note that the auto-traveling is not essential, and manual traveling using an operation rod, etc. (not illustrated) may be performed, and the auto-traveling described below may be manually performed. In addition, the surface measuring instrument 140 may be configured as an automobile, and a driver may get on the automobile and manually drive the automobile.

The surface measuring instrument 140 includes a base body 143, a pair of front wheels 144 and a pair of rear wheels 148 rotatably attached to the base body 143, a drive unit M1 that rotationally drives an axle of the front wheels 144, a steering unit M2 that brakes an orientation of the axle of the pair of front wheels 144, a cart communication unit M3 that wirelessly transmits and receives information, and a cart control unit M4 that controls the drive unit M1, the steering unit M2, and the cart communication unit M3.

The front wheels 144 and the rear wheels 148 are equivalent to the wheels 44. When the pair of front wheels 144 attached to the base body 143 is rotationally driven by the drive unit M1 and an orientation thereof is operated by the steering unit M2, the surface measuring instrument 140 moves on the measurement surface WL by itself.

The target 42 is fixed to the outer end surface of the front wheel 144 such that its optical center C is on a rotation axis (axle) of the front wheel 144.

The cart control unit M4 controls the steering unit M2 and the drive unit M1 according to a program incorporated in the cart control unit M4. The surface measuring instrument 140 performs travel (autonomous travel) in a predetermined pattern. The surface measuring instrument 140 can also be remotely operated (manual travel) by a controller (not illustrated). The controller may use a dedicated operation terminal, or may be configured as software and operated from a smartphone or a mobile personal computer in which operation software is installed. The surface measuring instrument 140 is operated by receiving an operation command input to the controller via the cart communication unit M3. Note that the cart communication unit M3 is not essential, and the surface measuring instrument 140 may be configured to perform only autonomous traveling in a programmed traveling pattern without performing manual traveling.

As long as the surface measuring instrument 140 can travel, and the surveying instrument 20 can track the target 42 and constantly perform distance measurement and angle measurement during traveling, the measurement surface WL may be an inclined surface, a bent surface, or an uneven surface, and any form may be used. The surface measuring instrument 140 may be provided with a suction mechanism such as a fan or a propulsion mechanism such as a propeller, and may also be configured to be capable of traveling on a wall surface or a ceiling surface.

The measurement method of the measurement surface WL using the surface measuring system 1 including the surface measuring instrument 140 is equivalent to a measurement method using the surface measuring instrument 40 except that the movement of the surface measuring instrument 140 is not the movement using the operation rod 41 but the traveling of the surface measuring instrument 140.

That is, first, the surveying instrument 20 is installed at a reference point. Next, the surface measuring instrument 140 is disposed at an initial position. The surveying instrument 20 locks the target 42 and starts auto-tracking. Next, the surface measuring instrument 140 moves on the measurement surface WL through autonomous traveling or manual traveling. The surveying instrument 20 constantly performs distance measurement and angle measurement at predetermined intervals while automatically tracking the target 42, and acquires measurement data at each measurement point.

Since the optical center C of the target 42 is disposed on the rotation axis of the front wheel 144 of the surface measuring instrument 140, even if the front wheel 144 rotates and the surface measuring instrument 140 moves, a distance from the measurement surface WL to the optical center C is constant (distance T) regardless of a posture of the surface measuring instrument 140. Since the front wheel 144 moves along the unevenness of the measurement surface WL, the unevenness of the measurement surface WL is calculated from the measurement data of the measurement point.

During the traveling of the surface measuring instrument 140, the movement direction, the traveling route, and the current location may be fed back on the basis of the measurement data of the surveying instrument 20 to the surface measuring instrument 140 via the cart communication unit M3, and auto-traveling may be performed in a predetermined pattern. For example, the surface measuring instrument 140 may be caused to travel along the measurement surface WL in a zigzag manner from one side edge portion to the other side edge portion of the measurement surface WL to exhaustively travel along the measurement surface WL. When a detection sensor is mounted on the base body 143 and an obstacle is detected during traveling of the surface measuring instrument 140, the surface measuring instrument 140 may be configured to bypass the obstacle.

### (Modification Example 2: Target)

FIGS. 10A1 to 10A3, FIGS. 10B1 and 10B2, and FIGS. 10C1 and 10C2 illustrate modification examples of the target 42. The target 42 is a target for distance measurement, angle measurement, and tracking of the surveying instrument 20. The target 42 is not limited to the above embodiment, and may be a target from which its own position information can be acquired from a remote place. The target 42 may be disposed to be exposed to the outside such as the outer end surface of the wheel 44 as long as the position information can be acquired and the center of the acquired position information is on the rotation axis of the wheel 44.

For example, as illustrated in FIGS. 9A1 to 9A3, the target 42 may include a plurality of prisms P1. The plurality of prisms P1 are equally arranged in the circumferential direction on the outer end surface of the wheel 44 such that the optical centers C1 of the respective prisms P1 about the rotation axis of the wheel 44 are on the same circumference. The distance-measuring light of the surveying instrument 20 simultaneously hits the plurality of prisms P1, and the position of the center of gravity is calculated as the optical center C from an average value thereof. In the target of the embodiment described above, since the plurality of prisms P1 are equally arranged around the rotation axis of the wheel 44, the optical centers C thereof are all on the rotation axis of the wheel 44 regardless of the number of prisms P1.

Furthermore, for example, as illustrated in FIGS. 10B1 and 10B2, a reflection sheet P2 may be used for the target 42, or a resin prism assembly P3 may be used. The reflection sheet P2 and the resin prism assembly P3 are formed in a circular or rectangular sheet shape. The reflection sheet P2 on the target 42 is equivalent to an optical target having a plurality of prisms, and the distance-measuring light of the surveying instrument 20 simultaneously hits a plurality of regression prisms, and a measurement value is calculated from an average value thereof. Shape centers of the reflection sheet P2 and the resin prism assembly P3 directly become the optical center C of the reflection sheet P2 or the resin prism assembly P3. Therefore, the reflection sheet P2 and the resin prism assembly P3 are attached to the outer end surface of the wheel 44 such that the shape centers thereof are on the rotation axis of the wheel 44.

Furthermore, as illustrated in FIGS. 10C1 and 10C2, a marker or a code such as an AR marker P4, a QR code (registered trademark) P5, or a barcode may be used as the target 42. These markers and cords are attached to the outer end surface of the wheel 44 such that a reading center position is on the rotation axis of the wheel 44.

In addition, a 3D scanner may be used as the surveying instrument 20, and a 3D scanner shaped object may be used as the target. The 3D scanner shaped object uses a shape object such as a sphere, a cube, a hemisphere, or a cone, and specifies a predetermined position from a point cloud obtained by scanning the shape object. This predetermined position is disposed on the rotation axis of the wheel 44 as the optical center C.
The present disclosure is not limited to the above aspect, and the target may be disposed such that the center position of the acquired position information is on the rotation center of the wheel 44.

### (Modification Example 3: Operation Rod)

FIGS. 11A to 11C and FIGS. 12A and 12B illustrate other modification examples of the surface measuring instrument 40.

A surface measuring instrument 240 illustrated in FIG. 11A has an operation rod 241 that is rotatably supported with respect to the base body 43. Therefore, the operator can measure postures of the wheel 44 and the base body 43 in a state in which the operator can easily perform the work. It is preferable that the rotation axis of the operation rod 241 is parallel to the rotation axis of the wheel 44 so that the operator can easily ascertain a posture of the base body 43. A surface measuring instrument 340 illustrated in FIG. 11B and a surface measuring instrument 440 illustrated in FIG. 11C respectively have operation rods 341 and 441 that each include a first joint rotatable with respect to the central axis of the operation rod and a second joint rotatable perpendicular to the first joint. The operation rods 341 and 441 are rotatable about two orthogonal axes by the two joints. The operation rods 341 and 441 are supported by the base body 43 such that one rotation axis is parallel to the rotation axis of the wheel 44. Since the operation rod is rotatable in two axes, the operator can easily operate the operation rod.

Further, the operation rod 41 may be connected to the base body 43 via a stretchable structure such as a spring. The operation rod 41 may be configured to be stretchable.

A surface measuring instrument 540 illustrated in FIG. 12A includes only one wheel 44. The target 42 is attached to the outer end surface of one wheel 44, and is rotatably supported by a side surface of a base body 543 on the inner end surface side. The rod-shaped operation rod 541 is attached to the base body 543 such that the extension of the central axis thereof passes through the optical center C of the target 42. Therefore, the operator can perform the work while recognizing the optical center C, that is, the measurement point of the surface measuring instrument 540. The base body 543 and the operation rod 541 may be integrated into one component.

A surface measuring instrument 640 illustrated in FIG. 12B includes the wheel 44 that is sandwiched by a base body 643 and rotatably supported inside the base body 642. Therefore, not the outer end surface of the wheel 44 but the side surface of the base body 643 is exposed to the outside. The target 42 is fixed to the side surface of the base body 642 such that the optical center C is on the rotation axis of the wheel 44. Even if the wheel 44 rotates in contact with the measurement surface WL or even if 643 relatively rotates on the rotation axis of the wheel 44, the optical center C of the target 42 is on the rotation axis of the wheel 44, and the distance from the measurement surface WL to the optical center C is kept constant (distance T). As described above, as long as the optical center C is always disposed on the rotation axis of the moving wheel 44, a fixed location of the target does not pose any problem. The location is not limited to the wheel, and may be a base body or an operation rod.

In addition, it is not essential to track the target 42 through tracking of the surveying instrument 20, and the target 42 may be measured manually or measurement data may be sparse. For example, when an inner circumferential surface of an inner frame is measured, a shape of the inner frame can be measured by manually measuring only a corner portion of the inner frame at the minimum.

Although the preferred embodiments of the present disclosure have been described above, the above-described embodiments are examples of the present disclosure. These embodiments can be combined based on knowledge of those skilled in the art, and such forms are also included in the scope of the present disclosure.

### Reference Signs List

1: Surface measuring system, 20: Surveying instrument, 40: Surface measuring instrument, 42: Target, 43: Base body, 44: Wheel (cylindrical body), C: Optical center, WL: Measurement surface

## Claims

1. A surface measuring instrument comprising:
a cylindrical body that lands on a measurement surface and has an outer circumferential side surface movable along the measurement surface;
a base body to which the cylindrical body is attached; and
a target from which position information of the target is able to be acquired through remote measurement, wherein
the target is disposed such that a center position of the position information is on a central axis of the cylindrical body.

2. The surface measuring instrument according to claim 1, wherein
the cylindrical body is a wheel, has a mechanism rotatable at a center, and is rotatably attached to the base body with a rotation axis being horizontal,
the target is a retroreflector that retroreflects incident light in a direction opposite to an incident direction, and the center position of the position information is an optical center of the target, and
the target is disposed on an end surface of the wheel such that the optical center is on the rotation axis of the wheel.

3. The surface measuring instrument according to claim 1, wherein
the cylindrical body is configured to be self-standing on the outer circumferential side surface.

4. The surface measuring instrument according to claim 1, wherein
the cylindrical body is configured as a divided body.

5. A surface measuring system comprising:
a surface measuring instrument including a cylindrical body that lands on a measurement surface and has an outer circumferential side surface movable along the measurement surface, a base body to which the cylindrical body is attached, and a target from which position information of the target is able to be acquired through remote measurement, the target being disposed such that a center position of the position information is on a central axis of the cylindrical body; and
a surveying instrument capable of measuring a distance and an angle of the target, wherein
the surveying instrument measures a distance and an angle of the target of the surface measuring instrument disposed along the measurement surface, acquires the position information of the target, and calculates shape data of the measurement surface.

6. A measurement method, by using a surface measuring instrument including a cylindrical body that lands on a measurement surface and has an outer circumferential side surface movable along the measurement surface, a base body to which the cylindrical body is attached, and a target from which position information of the target is able to be acquired through remote measurement, the target being disposed such that a center position of the position information is on a central axis of the cylindrical body, comprising:
acquiring the position information of the target while moving the surface measuring instrument along the measurement surface; and
acquiring the position information of the measurement surface by offsetting the position information of the target in a direction of the measurement surface by a radius of the cylindrical body, and calculating shape data of the measurement surface.
